# EUROPEAN PATENT APPLICATION

(11) **EP 4 219 584 A1**
(43) Date of publication of application: **02.08.2023**
(21) Application number: 21872104.1
(22) Date of filing: 31.08.2021
(51) Int. Cl.: C08G 59/20, C08G 59/66, C08K 3/013, C08L 63/00, C09J 11/04, C09J 11/06, C09J 163/00, C09K 3/10, H01L 23/29, H01L 23/31

(54) **EPOXY RESIN COMPOSITION AND CURED PRODUCT**

(30) Priority: 25.09.2020 JP 2020161114
(71) Applicant: ThreeBond Co., Ltd., Tokyo 192-0398 (JP)
(72) Inventor: IWASAWA, Jyunya, Hachioji-shi, Tokyo 192-0398 (JP)
(74) Representative: Petty, Catrin Helen
(86) International application number: PCT/JP2021/031884
(87) International publication number: WO 2022/064972

(57) **Abstract**

The present invention provides an epoxy resin having excellent adhesiveness to different materials.

The epoxy resin composition of the present invention includes the following (A) to (E):
(A) a compound with an epoxy equivalent of less than 210 g/eq. that is liquid at 25°C and has two or more epoxy groups in one molecule,
(B) (B-1) a compound with an epoxy equivalent of 210 g/eq. or more that is liquid at 25°C and has two or more epoxy groups in one molecule and/or (B-2) a compound that is solid at 25°C and has two or more epoxy groups in one molecule,
(C) a thiol curing agent,
(D) a latent curing agent,
(E) a reactive diluent.

## Description

### TECHNICAL FIELD

The present invention relates to an epoxy resin composition having excellent adhesiveness to different materials and a cured product thereof.

### BACKGROUND ART

In recent years, parts and members have been increasingly diversified, and adhesives are required to enable adhesion between different materials with different coefficients of linear expansion. Among them, epoxy resins are used in a wide range of fields because of their favorable adhesive strength, chemical resistance, and durability, and are also suitably used for adhesion to different materials. As an example of such epoxy resins, for example, Japanese Patent Laid-Open No. 2019-156965, proposes an epoxy resin composition containing (A) a thiol-based curing agent, (B) a multifunctional epoxy resin, and (C) a crosslink-density modifier containing a monofunctional epoxy resin and having specific relationship between the number (amount) of thiol groups of these components and the number (amount) of epoxy groups.

### SUMMARY OF INVENTION

### Technical Problem

However, conventional adhesives (epoxy resins) used for adhesion between different materials do not have sufficient adhesiveness for different materials, and are required for further improvements in the adhesiveness. Moreover, conventional adhesives (epoxy resins) have problems such as high curing temperatures and poor workability due to their high viscosities. Furthermore, conventional adhesives (epoxy resins), viscosities of which were lowered to improve workability, may have had large cure shrinkage, resulting in distortion of members to be adhered upon the curing.

The present invention has been completed in view of the aforementioned circumstances, and an object of the present invention is to provide an epoxy resin composition having excellent adhesiveness to different materials. Moreover, another object of the present invention is to provide an epoxy resin composition that has low temperature curability and a low viscosity for exhibiting favorable workability, in addition to excellent adhesiveness to different materials, and also has low cure shrinkage property. Further, the other object of the present invention is to provide a cured product obtained by curing the aforementioned epoxy resin composition.

### Solution to Problems

The present inventors have found, as a result of diligent experimentation to solve the above problem that the epoxy resin composition that will be described in detail below has excellent adhesiveness to different materials and thus have completed the present invention.

The gist of the present invention will be described below.

[1] An epoxy resin composition containing the following components (A) to (E) :
   (A) a compound with an epoxy equivalent of less than 210 g/eq. that is liquid at 25°C and has two or more epoxy groups in one molecule,
   (B) (B-1) a compound with an epoxy equivalent of 210 g/eq. or more that is liquid at 25°C and has two or more epoxy groups in one molecule and/or (B-2) a compound that is solid at 25°C and has two or more epoxy groups in one molecule,
   (C) a thiol curing agent,
   (D) a latent curing agent,
   (E) a reactive diluent.
[2] The epoxy resin composition according to [1], wherein the component (A) is a bisphenol type epoxy resin.
[3] The epoxy resin composition according to [1] or [2], wherein a content of the component (B) is 1 to 100 parts by mass relative to 100 parts by mass of the component (A).
[4] The epoxy resin composition according to any one of [1] to [3], wherein the component (B) is a bisphenol type epoxy resin and/or a biphenyl type epoxy resin.
[5] The epoxy resin composition according to any one of [1] to [4], wherein the component (C) is a compound having three or more SH groups.
[6] An epoxy resin composition according to any of [1] to [5], wherein a content of the component(C) is 50 to 300 parts by mass relative to 100 parts by mass of the component (A).
[7] The epoxy resin composition according to any one of [1] to [6], further containing (F) an inorganic filler.
[8] The epoxy resin composition according to any one of [1] to [7], which has cure shrinkage rate of 5% or less.
[9] The epoxy resin composition according to any one of [1] to [8], for use in adhesion and/or sealing between adherends having different coefficients of linear expansion.
[10] A cured product of the epoxy resin composition according to any one of [1] to [9] .

### DESCRIPTION OF EMBODIMENTS

Embodiments of the present invention will be described below. Note, however, the present disclosure is not limited only to the following embodiments. Incidentally, "X to Y" as used herein refers to a range including the numerical values (X and Y) described before and after thereof as the lower limit values and the upper limit values, and refers to "X or more and Y or less". Moreover, "concentration" and "%" refer to a concentration by mass and a percent by mass, respectively, unless otherwise specified, and "ratio" refers to a mass ratio unless otherwise specified. Further, operations and measurements of physical properties are carried out at room temperature (20 to 25°C)/relative humidity of 40 to 55% RH, unless otherwise specified. In addition, "A and/or B" refers to including each of A and B and combinations thereof.

### [Epoxy resin composition]

The epoxy resin composition according to an aspect of the present invention (hereinafter also referred to as "epoxy resin composition" or simply "resin composition") contains the following components (A) to (E):
(A) a compound with an epoxy equivalent of less than 210 g/eq. that is liquid at 25°C and has two or more epoxy groups in one molecule,
(B) (B-1) a compound with an epoxy equivalent of 210 g/eq. or more that is liquid at 25°C and has two or more epoxy groups in one molecule and/or (B-2) a compound that is solid at 25°C and has two or more epoxy groups in one molecule,
(C) a thiol curing agent,
(D) a latent curing agent,
(E) a reactive diluent.

The epoxy resin composition according to an aspect of the present invention has excellent adhesiveness to different materials. Moreover, the epoxy resin composition according to an aspect of the present invention is quite useful because the epoxy resin composition has, in addition to excellent adhesiveness to different materials, low temperature curability and a low viscosity for exhibiting favorable workability, and also has low cure shrinkage property.

Although the details of this mechanism are unknown, it is conjectured that the epoxy resin composition according to the present invention contains, in addition to the component (A), the component (B) having a higher molecular weight (higher epoxy equivalent) compared with the component (A), thereby obtaining an effect of improving excellent adhesiveness to different materials. When the epoxy resin composition does not contain a compound corresponding to the component (B), on the other hand, the adhesiveness to different materials is lowered (Comparative Example 1 described below).

Note, however, the aforementioned mechanism is based on speculation, and the correctness or incorrectness of the mechanism does not affect the technical scope of the present invention.

### <Component (A)>

The component (A) contained in the epoxy resin according to the present invention is a compound with an epoxy equivalent of less than 210 g/eq. that is liquid at 25°C and has two or more epoxy groups in one molecule.

In the present description, "being liquid at 25°C" refers to being in a fluid state at 25°C. Specifically, "being liquid at 25°C" refers to satisfying at least one of the following (i) and (ii) :
(i) a viscosity measured by a cone-plate type rotational viscometer at 25°C is 100 Pa·s or lower;
(ii) a softening point or a melting point is lower than 35°C (the softening point is taken when both a softening point and a melting point are present).

Incidentally, the above softening point is measured by a method complied with JIS K 7234:1986 (ball-and-ring method). Moreover, the above melting point is determined by differential scanning calorimetry (DSC).

Further, the epoxy equivalent as used herein is a value measured, complied with JIS K 7236:2001. Moreover, in the case of being unable to determine the epoxy equivalent by the above method, it may be calculated as a value obtained by dividing the molecular weight of a target epoxy resin by the number of epoxy groups contained in one molecule of the epoxy resin.

The epoxy equivalent of the component (A) is preferably 50 g/eq. or more and less than 210 g/eq., more preferably 100 g/eq. or more and less than 210 g/eq., and particularly preferably 130 g/eq. or more and 180 g/eq. or less, from the viewpoint of exhibiting low temperature curability and lowering cure shrinkage property.

Moreover, from the viewpoint of lowering the viscosity of the resulting epoxy resin composition, a viscosity of the component (A) at 25°C is preferably 0.01 Pa·s or higher and lower than 100 Pa·s, more preferably 0.1 Pa·s to 70 Pa·s at 25°C, and still more preferably 0.1 to 50 Pa·s, and even still more preferably 0.3 to 10 Pa·s, and most preferably 0.5 to 5 Pa·s.

In addition, a softening point or a melting point of the component (A) (the softening point is taken when both a softening point and a melting point are present) is preferably 10°C or higher and lower than 35°C and more preferably 15°C or higher and 30°C or lower.

A compound of the component (A) is not particularly limited as long as it has two or more epoxy groups in one molecule, and the compound preferably has two to six epoxy groups (i.e., a di-to hexagonal-functional epoxy resin), more preferably two to three epoxy groups (i.e., a di- to tri-functional epoxy resin), and particularly preferably two epoxy groups (a difunctional epoxy resin).

Specific examples of compounds of the component (A) include but are not limited to, bisphenol type epoxy resins such as a bisphenol A type epoxy resin, a bisphenol F type epoxy resin, a bisphenol S type epoxy resin, a bisphenol AD type epoxy resin, a bisphenol AF type epoxy resin, and a hydrogenated bisphenol type epoxy resin; phenol novolac type epoxy resins; glycidylamine type epoxy resins; dimer acid modified epoxy resins; alicyclic epoxy resins, and the like. They may be used singly or in mixture of two or more types thereof. Among them, from the viewpoint of enabling lower cure shrinkage property, the component (A) is preferably a bisphenol type epoxy resin. Furthermore, from the same viewpoint as above, the component (A) more preferably contains at least one type selected from the group consisting of a bisphenol A type epoxy resin, a bisphenol F type epoxy resin, and a bisphenol AF type epoxy resin, and particularly preferably both the bisphenol A type epoxy resin and the bisphenol F type epoxy resin.

The compound (epoxy resin) for use as the component (A) may be either synthetic or commercially available.

Commercial products of the component (A) include, but are not limited to, for example, jER (registered trademark) 825, 827, 828, 828EL, 828XA, 828US, 806, 806H, 807, 152, 871, 872, YL980, YL983U, YX8000, YX8034 (manufactured by Mitsubishi Chemical Corporation), EPICLON (registered trademark) 840, 840S, 850, 850S, 850CRP, 850-LC, 830, 835, EXA-830LVP, EXA-830LVP, EXA-835LV, N-730A (manufactured by DIC Corporation), Denacol (registered trademark) EP-4100, EP-4100G, EP-4100E, EP-4300E, EP-4530, EP-4901, EP-4901E (manufactured by ADEKA CORPORATION), EX-810, EX-811, EX-850, EX-821, EXA-920, EX-201, EX-201, EX-212 (manufactured by Nagase ChemteX Corporation), and the like.

The compound (epoxy resin) as the aforementioned component (A) may be used singly, or two or more thereof may be combined for use. In the case of combining for use two or more types, the content of the component (A) refers to the total amount of the two or more types.

### [Component (B)]

The component (B) contained in the epoxy resin according to the present invention contains the following component (B-1) and/or component (B-2):
component (B-1): a compound with an epoxy equivalent of 210 g/eq. or more that is liquid at 25°C and has two or more epoxy groups in one molecule,
component (B-2): a compound that is solid at 25°C and has two or more epoxy groups in one molecule.

The component (B) in combination with the component (A) above, can improve adhesiveness to different materials while maintaining low cure shrinkage property.

Incidentally, a compound "being liquid at 25°C" is in accordance with the definition described in the explanation of the component (A) above. The epoxy equivalent of a compound is also a value, as measured by the measurement method described in the explanation of the component (A) above.

"Being solid at 25°C" refers to the state of non-flowability at 25°C. Specifically, "being solid at 25°C" refers to satisfying at least one of the following (i') and (ii'):
(i') a viscosity measured by a cone-plate type rotational viscometer at 25°C is higher than 100 Pa·s;
(ii') a softening point or a melting point is 35°C or higher (the softening point is taken when both a softening point and a melting point are present). Note, however, the methods of measuring the softening point and the melting point are according to the method described in the explanation of the component (A) above.

The epoxy equivalent of the component (B-1) is preferably 210 to 1,000 g/eq., more preferably 230 to 700 g/eq., still more preferably 230 to 500 g/eq., and most preferably 230 to 300 g/eq. When the epoxy equivalent of the component (B-1) is 210 g/eq. or more, or even 230 g/eq. or more, adhesive strength to different materials can be improved while maintaining low cure shrinkage property. When the epoxy equivalent of the component (B-1) is 1,000 g/eq. or less, an epoxy resin composition with low viscosity and excellent workability can be obtained.

Moreover, from the viewpoint of lowering the viscosity of the resulting epoxy resin composition, the viscosity of the component (B-1) at 25°C is preferably 0.01 Pa·s or higher and lower than 100 Pa·s, more preferably 0.1 Pa·s to 70 Pa·s, still more preferably 0.1 Pa·s to 50 Pa·s, even still more preferably 0.3 Pa·s to 10 Pa·s, and most preferably 0.5 Pa·s to 5 Pa·s.

Moreover, the softening point or the melting point (when both a softening point and a melting point are present, the softening point is taken) of the component (B-1) is preferably 10°C or higher and lower than 35°C and more preferably higher than 25°C and lower than 35°C.

The epoxy equivalent of the component (B-2) is not particularly limited, but is preferably 100 to 3,000 g/eq., more preferably 130 to 2,000 g/eq., still more preferably 150 to 1,000 g/eq., and most preferably 230 to 800 g/eq. When the epoxy equivalent of the component (B-2) is 100 g/eq. or more, or even 230 g/eq. or more, adhesive strength to different materials can be improved while maintaining low cure shrinkage property. Further, when the epoxy equivalent of the component (B-2) is 3,000 g/eq. or less, or even 800 g/eq. or less, an epoxy resin composition with low viscosity and excellent workability can be obtained.

Moreover, the softening point or the melting point (when both a softening point and a melting point are present, the softening point is taken) of the component (B-2) is preferably 40°C to 200°C, more preferably 50°C to 150°C, still more preferably 55°C to 130°C, and most preferably 60°C to 100°C. When the component (B-2) has a softening point or a melting point of 40°C to 200°C, the component (B-2) has favorable compatibility with the component (A), and thus an epoxy resin composition having a low viscosity can be obtained.

For the compounds of the component (B) (the component (B-1) and the component (B-2)), the number of epoxy groups in one molecule of each compound is not particularly limited as long as it has two or more epoxy groups, however, the number of epoxy groups is preferably two to six (di- to hexagonal-functional epoxy resin), more preferably two to three (di- to tri-functional epoxy resin), and particularly preferably two (difunctional epoxy resin). By setting the number of epoxy groups within the aforementioned range, adhesive strength to different materials can be improved while maintaining low cure shrinkage property.

Specific examples of the component (B) (the component (B-1) and the component (B-2)) include, but not limited to, a bisphenol type epoxy resin, a naphthalene type epoxy resin, a dicyclopentadiene type epoxy resin, a phenol novolac resin, a cresol novolac resin, a biphenyl type epoxy resin, and the like. They may be used singly or in mixture of two or more thereof. In particular, from the viewpoint of being able to lower cure shrinkage property, the component (B) is preferably a bisphenol type epoxy resin and/or a biphenyl type epoxy resin. Furthermore, from the same viewpoint as above, the component (B) preferably contains at least one selected from the group consisting of a bisphenol A type epoxy resin, a bisphenol F type epoxy resin, and a biphenyl epoxy resin.

Moreover, from the viewpoint of obtaining an epoxy resin composition with an excellent low viscosity and low temperature curability, the component (B) preferably contains the (B-1). Furthermore, from the same viewpoint, the component (B) preferably contains only the component (B-1) (i.e., the component (B) is preferably the component (B-1)).

The compound (epoxy resin) for use as the component (B) may be either synthetic or commercially available.

Commercial products of the component (B) include, but are not limited to, jER (registered trademark) 834, 1001, 1002, 1003, 1055, 1004, 1004AF, 4005P, 4007P, YX4000H (manufactured by Mitsubishi Chemical Corporation), EPICLON (registered trademark) 860, 1050, 1055, 2050, 3050, 4050, 7050, HM -091, HP-7200L, HP-7200, HP-7200H, HP-4700, HP-4770 (manufactured by DIC Corporation), and the like.

The compound (epoxy resin) as the aforementioned component (B) may be used singly, or two or more thereof may be combined for use. In the case of combining for use two or more types, the content of the component (B) refers to the total amount of the two or more types.

A content of the component (B) is preferably 1 to 100 parts by mass, more preferably 5 to 100 parts by mass, still more preferably 10 to 80 parts by mass, even more preferably 15 to 70 parts by mass, and most preferably 20 to 50 parts by mass, relative to 100 parts by mass of the component (A). When the content of the component (B) is 1 part by mass or more, or even 5 parts by mass or more, adhesiveness to different materials can be improved while maintaining low cure shrinkage property. Moreover, when the content of the component (B) is 100 parts by mass or less, an epoxy resin composition with low viscosity and excellent workability can be obtained.

### [Component (C)]

The component (C) contained in the epoxy resin according to the present invention is a thiol curing agent. The thiol curing agent as the component (C) is not particularly limited as long as it has one or more thiol groups (SH groups) in one molecule. From the viewpoint of obtaining an epoxy resin composition excellent in low temperature curability, the thiol curing agent is preferably a compound having two or more SH groups, more preferably a compound having three or more SH groups, and most preferably a compound having four or more SH groups. On the contrary, the upper limit of the number of SH groups is not particularly limited, but from the viewpoint of obtaining an epoxy resin composition excellent in workability due to its low viscosity, the upper limit is 10 or less.

From the viewpoint of low temperature curability, the thiol equivalent of the component (C) is not particularly limited, but is preferably 50 to 500 g/eq. (g/mol), more preferably 70 to 300 g/eq. (g/mol), still more preferably 90 to 200 g/eq. (g/mol), and most preferably 110 to 150 g/eq. (g/mol). The thiol equivalent can be determined by an iodine titration method. Moreover, when the thiol equivalent cannot be determined by the method, it may be calculated as a value obtained by dividing the molecular weight of the target thiol curing agent by the number of SH groups contained in one molecule of the thiol curing agent.

The substitution position of an SH group contained in the thiol curing agent as the component (C) is not particularly limited and may be present at the end of the compound or as a side chain (on the side chain). In other words, the SH groups contained in the thiol curing agent as the component (C) may be any of a primary thiol group, a secondary thiol group, or a tertiary thiol group. Among them, from the viewpoint of lowering cure shrinkage of the epoxy resin composition, a primary thiol group or a secondary thiol group is preferred, and the secondary thiol group is more preferred. Namely, from the viewpoint of lowering cure shrinkage of the epoxy resin composition, the thiol curing agent as the component (C) is preferably a primary thiol compound or a secondary thiol compound, and more preferably a secondary thiol compound. It is noted that a primary thiol group means that the carbon bonded to a sulfur atom (the carbon to which the SH group is bonded) is a primary carbon atom, and similarly, a secondary thiol group and a tertiary thiol group mean that the carbon bonded to a sulfur atom (the carbon to which the SH group is bonded) is a secondary carbon atom and a tertiary carbon atom, respectively.

Specific examples of the component (C) include but are not limited to, primary thiol compounds such as trimethylolpropane tris(3-mercaptopropionate), tris-[(3-mercaptopropionyloxy)-ethyl]-isocyanurate, pentaerythritol tetrakis(3-mercaptopropionate), tetraethylene glycol bis(3-mercaptopropionate), dipentaerythritol hexakis(3-mercaptopropionate); secondary thiol compounds such as pentaerythritol tetrakis(3-mercaptobutyrate), 1,4 -bis(3-mercaptobutyryloxy)butane, 1,3,5-tris(3-mercaptobutyryloxyethyl)-1,3,5-triazine-2,4,6(1H,3H,5H)-trione, trimethylolpropane tris(3-mercaptobutyrate), trimethylolethane tris(3-mercaptobutyrate), trimethylolpropane tris(3-mercaptobutyrate), trimethylolethane tris(3-mercaptobutyrate); and the like. They may be used singly and may be used in mixture of two or more types thereof.

The thiol curing agent for use as the component (C) may be either synthetic or commercially available.

Commercial products of the component (C) include, but are not limited to, TMMP, TEMPIC, PEMP, EGMP-4, DPMP, which are manufactured by SC Organic Chemical Co., Ltd., KarenzMT (registered trademark) PE1, BD1, NR1, TPMB, which are manufactured by Showa Denko Corporation, and the like.

The thiol curing agent as the aforementioned component (C) may be used singly or two or more thereof may be combined for use. In the case of combining for use two or more types, the content of the component (C) refers to the total amount of the two or more types.

A content of the component (C) is preferably 50 to 300 parts by mass, more preferably 130 to 250 parts by mass, and most preferably 150 to 230 parts by mass, relative to 100 parts by mass of the component (A). When the content of the component (C) above is 50 parts by mass or more, an epoxy resin composition with excellent low temperature curability and adhesiveness can be obtained. In addition, when the content of the component (C) above is 300 parts by mass or less, favorable adhesive strength can be maintained.

A content of the component (C) is preferably 50 to 300 parts by mass, more preferably 70 to 200 parts by mass, still more preferably 100 to 170 parts by mass, and most preferably 135 to 160 parts by mass, relative to 100 parts by mass of the total of the component (A) and the component (B). When the content of the component (C) above is 50 parts by mass or more, an epoxy resin composition with excellent low temperature curability and adhesiveness can be obtained. In addition, when the content of the component (C) is 300 parts by mass or less, favorable adhesive strength can be maintained.

A ratio of functional group equivalents of the component (A) and the component (B) to that of the component (C) ({a functional group equivalent of the component (A) + a functional group equivalent of the component (B)}/a functional group equivalent of the (C) group) is preferably 0.1 to 2.0, more preferably 0.2 to 1.5, still more preferably 0.3 to 1.0, and most preferably 0.40 to 0.60. When the ratio of the functional group equivalents is 0.1 to 2.0, the curability of the epoxy resin composition can be improved. It is noted that the ratio of functional group equivalents is a value obtained by calculating a ratio ({(A)+(B)}/(C)) of value obtained by dividing the content (blended amount) of each component by the epoxy equivalent or SH equivalent.

A procedure to determine the aforementioned ratio of functional group equivalents will be specifically described below:

First, for the component (A) and the component (B), an epoxy functional group equivalent, i.e., the total number of epoxy groups contained in each of these components, is determined. Specifically, the value is obtained by dividing the mass (g) of the epoxy resin contained in each of the component (A) and the component (B) by the epoxy equivalent of the epoxy resin. In the same manner, for the component (C), a thiol functional group equivalent, i.e., the total number of SH groups contained in the component (C) is determined. Specifically, the value is obtained by dividing the mass (g) of the thiol compound contained in the component (C) by the thiol (SH) equivalent of the thiol compound. Incidentally, when a plurality of epoxy resins or thiol compounds is contained in a component, the aforementioned value (functional group equivalent) for each epoxy resin or thiol compound is calculated, and a weighted average of these values is regarded as an epoxy functional group equivalent or a thiol functional group equivalent of each component.

Next, the sum of the epoxy functional group equivalents of the component (A) and the component (B) obtained as described above is divided by the thiol functional group equivalent of the component (C), thereby enabling a ratio of functional group equivalents of the component (A) and the component (B) to that of the component (C) to be obtained.

### [Component (D)]

The component (D) contained in the epoxy resin according to the present invention is a latent curing agent. The latent curing agent refers to a curing agent capable of ensuring storage stability, such as minimal changes in viscosity and physical properties with an elapse of time, in a state of being dispersed in the component (A) and the component (B).

The component (D) is not particularly limited as long as it is a latent curing agent as described above, but it promotes curing by the component (C) and is particularly preferably a compound with a thermosetting property.

Moreover, as the component (D), a compound having an imidazole skeleton; an epoxy adduct compound obtained by adding a tertiary amine compound and the like to an epoxy resin and terminating reaction in the middle thereof (reaction product of an epoxy compound and a tertiary amine compound and the like); and the like, are preferably used, and further fine powder which is obtained by pulverizing these compounds is preferably used. Among them, from the viewpoint of maintaining low temperature curability and lowering cure shrinkage property the component (D) is preferably a modified aliphatic polyamine adduct or a modified alicyclic polyamine adduct, and particularly preferably a modified aliphatic polyamine adduct.

When the component (D) is a compound having an imidazole skeleton or an epoxy adduct compound, the amine value thereof is preferably 50 to 300, more preferably 70 to 200, and most preferably 80 to 150. When the aforementioned amine value is 50 to 300, the resulting epoxy resin composition can maintain good storage stability and low temperature curability. It is noted that the amine value is defined as the mass (mg) of potassium hydroxide (KOH) equivalent to hydrochloric acid necessary to neutralize a primary, secondary, and tertiary amines contained in 1 g of the epoxy adduct compound. The amine value can be measured according to ASTM D2074.

From the viewpoint of improving curability (increasing the curing speed) and rendering storage stability favorable, the component (D) is preferably solid at 25°C. From the same viewpoint, the softening point of the component (D) is preferably 70 and 300°C, more preferably 90 and 200°C, and most preferably 100 and 130°C from the viewpoints of low temperature curability and storage stability.

An average particle diameter of the component (D) is preferably 0.1 to 50 µm, more preferably 1 to 30 µm, still more preferably 2 to 20 µm, and most preferably 5 to 10 µm. When the aforementioned average particle diameter is 0.1 to 50 µm, dispersibility when mixed in the component (A) and the component (B) becomes good, and an epoxy resin composition exhibiting stable low temperature curability can be obtained. As a method of measuring the average particle diameter, a particle size/shape distribution measuring instrument in the manner of laser diffraction scattering or micro-sorting control, image analysis such as an optical microscope and an electronic microscope can be mentioned.

The latent curing agent as the component (D) may be either synthetic or commercially available.

Commercial products of the component (D) include but are not limited to, for example, AMICURE (registered trademark) PN-23, PN-23J, PN-31, PN-31J, PN-40J, PN-H, PN-R, MY-24, MY-R (manufactured by Ajinomoto Fine Techno Co., Ltd.), Fujicure (registered trademark) FXE-1000, FXR-1030, FXR-1081 (manufactured by T&K TOKA CO., LTD.), Curezol (registered trademark) SIZ, 2MZ-H, C11Z, C17Z, 2PZ, 2PZ-PW, 2P4MZ (manufactured by Shikoku Kasei Kogyo Co., Ltd.), and the like.

The latent curing agent as the aforementioned component (D) may be used singly, or two or more thereof may be combined for use. In the case of combining for use two or more types, the content of the component (D) refers to the total amount of the two or more types.

A content of the component (D) is preferably 0.001 to 30 parts by mass, more preferably 0.01 to 20 parts by mass, still more preferably 0.01 to 17 parts by mass, and most preferably 5 to 16 parts by mass, relative to 100 parts by mass of the component (C). When the content of the component (D) is 0.001 to 30 parts by mass, the low temperature curability can be maintained while favorably maintaining the storage stability of the epoxy resin composition.

### [Component (E)]

The component (E) contained in the epoxy resin according to the present invention is a reactive diluent. Here, the reactive diluent is a compound that has a group that itself reacts with the components (A) to (D), while also serves as a solvent.

The component (E) is not particularly limited as long as it is a reactive diluent as described above, but from the viewpoint of lowering a viscosity of the epoxy resin composition, the (E) compound preferably has one epoxy group in one molecule.

From the viewpoint of lowering the viscosity of the resulting epoxy resin composition, the viscosity of the component (E) is preferably 1 to 1,000 mPa·s, more preferably 1 to 700 mPa·s, still more preferably 1 to 500 mPa·s, and most preferably 10 to 100 mPa·s.

The epoxy equivalent of the component (E) is preferably 100 to 500 g/eq., more preferably 150 to 300 g/eq., and most preferably 170 to 250 g/eq. When the epoxy equivalent is 100 to 500 g/eq., an epoxy resin composition with a low viscosity and excellent cure shrinkage property can be obtained while favorably maintaining curability of the epoxy resin composition.

Specific examples of the component (E) include, but are not limited to, phenyl glycidyl ether, cresyl glycidyl ether, p-tert-butyl phenyl glycidyl ether, 2-ethylhexyl glycidyl ether, butyl glycidyl ether, C12-C14 alcohol glycidyl ether, butane diglycidyl ether, hexanediglycidyl ether, cyclohexane dimethyl diglycidyl ether, neodecanoic acid glycidyl ester, glycidyl ethers having a polyethylene glycol or a polypropylene glycol as a main skeleton, and the like. Moreover, they may be used singly and may be used in mixture of two or more types thereof. When two or more types thereof are used in combinations, the content of the component (E) refers to the total amount of the two or more types.

Among the aforementioned compounds, from the viewpoint of improving adhesive strength to different materials while maintaining low cure shrinkage property, the component (E) is preferably p-tert-butylphenyl glycidyl ether.

A content of the component (E) is preferably 10 to 300 parts by mass, more preferably 20 to 200 parts by mass, still more preferably 50 to 120 parts by mass, and most preferably 60 to 100 parts by mass, relative to 100 parts by mass of the total of (A) and (B). When the content of the component (E) is 10 to 300 parts by mass, an epoxy resin composition having a low viscosity can be obtained while maintaining favorable adhesive strength.

### [Component (F)]

The epoxy resin composition according to the present invention may further contain an inorganic filler as the component (F), in addition to the components (A) to (E) above.

As the component (F), known materials used as inorganic fillers can be used. Specific examples of the component (F) include but are not limited to, alumina powder, calcium carbonate powder, talc powder, silica powder, fumed silica powder, silver powder, nickel powder, palladium powder, carbon powder, tungsten powder, plating powder, and the like. They may be used singly or in mixture of two or more thereof. In the case of combining for use two or more types, the content of the component (E) refers to the total amount of the two or more types.

Among the aforementioned inorganic fillers, from the viewpoint of improving adhesion strength, the component (F) preferably contains silica powder or fumed silica powder, more preferably silica powder, and particularly preferably spherical silica powder.

An average particle diameter of the component (F) is preferably 0.01 to 50 µm, more preferably 0.1 to 30 µm, and particularly preferably 0.1 to 5 µm. When the average particle diameter is 0.01 to 50 µm, the high viscosity of the resulting epoxy resin composition can be effectively suppressed.

A content of the component (F) is preferably 1 to 300 parts by mass, more preferably 30 to 200 parts by mass, and most preferably 50 to 150 parts by mass, relative to 100 parts by mass of the total of the component (A) and the component (B). When the content of the component (F) is 1 to 300 parts by mass, the adhesion strength can be improved while inhibiting the viscosity of the resulting epoxy resin composition from becoming high.

### [Optional components]

The epoxy resin according to the present invention may contain, in addition to the components (A) to (E) above, additives such as an organic filler (excluding the components (A) to (E)), pigments, dyes, a silane coupling agent, a leveling agent, a rheology control agent, and a storage stabilizer, as optional components, to the extent that the properties of the present invention are not impaired.

The aforementioned organic fillers that are powders of organic materials (excluding the components (A) to (E)) composed of rubber, elastomers, plastics, polymers (or copolymers), and the like, can be used. An organic filler with a multilayer structure such as a core-shell type can also be used as the organic filler. They may be used singly or in combination with two or more thereof.

An average particle diameter of the organic filler is preferably in the range of 0.05 to 50 µm. From the viewpoint of improving durability, fillers consisting of polymers of acrylic ester and/or methacrylic ester or a copolymer thereof and fillers consisting of a polymer or copolymer of styrene compounds are preferred as the organic filler. The suitable content of the organic filler (when two or more types thereof are included, the content refers to the total amount of the two or more types) is preferably 1 to 50 parts by mass and more preferably 5 to 30 parts by mass, relative to 100 parts by mass of the component (A).

Examples of the aforementioned silane coupling agents include, for example, glycidyl group-containing silane coupling agents such as 3-glycidoxypropyl methyldimethoxysilane, 3-glycidoxypropyl methyldiethoxysilane, 3-glycidoxypropyl methyldipropyloxysilane, 3-glycidoxypropyl dimethylmonomethoxysilane, 3-glycidoxypropyl dimethylmonoethoxysilane, 3-glycidoxypropyl dimethylmonopropyloxysilane, 2-(3,4-epoxycyclohexyl)ethyltrimethoxysilane, 3-glycidoxypropyltriethoxysilane, 3-glycidoxypropyltrimethoxysilane, and 3-glycidoxypropylmethyldiethoxysilane; vinyl group-containing silane coupling agents such as vinyltris(β-methoxyethoxy)silane, vinyltriethoxysilane, and vinyltrimethoxysilane; (meth)acrylic group-containing silane coupling agents such as 3-methacryloxypropyl methyldimethoxysilane, 3-methacryloxypropyl methyldiethoxysilane, 3-methacryloxypropyl dimethylmonomethoxysilane, 3-methacryloxypropyl dimethylmonoethoxysilane, 3-acryloxypropyl methyldipropyloxysilane, 3-acryloxypropyl methyldimethoxysilane, 3-acryloxypropyl trimethoxysilane, 3-acryloxypropyl methyldiethoxysilane, 3-acryloxypropyl methyldipropyloxysilane, 3-acryloxypropyl dimethylmonopropyloxysilane, 3-acryloxypropyl dimethylmonomethoxysilane, 3-acryloxypropyl dimethylmonoethoxysilane, 3-acryloxypropyl dimethylmonopropyloxysilane, and 3-methacryloxypropyl trimethoxysilane; amino group-containing silane coupling agents such as N-β-(aminoethyl)-γ-aminopropyltrimethoxysilane, γ-aminopropyltriethoxysilane, N-phenyl-γ-aminopropyltrimethoxysilane; γ-mercaptopropyl trimethoxysilane; γ-chloropropyltrimethoxysilane, and the like. Among them, the glycidyl group-containing silane coupling agents are preferred from the viewpoint of excellent adhesive strength. They may be used singly or in combinations of two or more thereof. The suitable range of content of the silane coupling agent (or the total amount when two or more of the agents are contained) is 0.1 to 20 parts by mass relative to 100 parts by mass of the component (A) .

As the storage stabilizer, boric acid ester, phosphoric acid, an alkyl phosphate, and p-toluenesulfonic acid, can be used. The boric acid esters include, but are not limited to, tributyl borate, trimethoxyboroxine, ethyl borate, and the like. The alkyl phosphates include, but are not limited to, trimethyl phosphate, tributyl phosphate, and the like. They may be used singly or in mixture of a plurality thereof. Considering the effect on the cure shrinkage, the storage stabilizer is preferably one or more selected from the group consisting of phosphoric acid, an alkyl phosphate, boric acid ester, trimethoxyboroxine, and methyl p-toluenesulfonate, and more preferably phosphoric acid or boric acid ester. From the viewpoint of maintaining low temperature curability and lowering the cure shrinkage property, the suitable content of the storage stabilizer (the total amount when two or more types thereof are contained) is preferably 0.1 to 10 parts by mass relative to 100 parts by mass of the component (A).

### <Production method of epoxy resin composition>

The method for producing the epoxy resin composition according to the present invention is not particularly limited, and can be produced by any conventionally known method. For example, the epoxy resin composition according to the present invention can be obtained by weighing each predetermined amount of the component (A) to the component (E), the component (F) added, if necessary, and an arbitrary component (optional component), adding them sequentially or simultaneously to a mixing vessel in any order, and then mixing them using mixing means such as a mixer. At this time, the production conditions are not particularly limited, but a mixing temperature is preferably 10 to 50°C and a mixing time is preferably 10 minutes to 3 hours.

### <Coating method (Applying method)>

The method for applying the epoxy resin composition according to the present invention to an adherend is the same as the known method of applying seal materials and adhesives. For example, methods of dispensing using automatic coating machines, spraying, inkjet, screen printing, gravure printing, dipping, spin coating, and the like, can be used.

From the viewpoint of coatability, the viscosity (25°C) of the epoxy resin composition according to the present invention is preferably 10,000 mPa·s or lower, more preferably 5,000 mPa·s or lower, still more preferably 2,000 mPa·s or lower, particularly preferably 1,500 mPa·s or lower, and most preferably 600 mPa·s or lower. The lower limit, on the other hand, is not particularly limited, and for example, 100 mPa·s or higher, or even 200 mPa·s or higher.

### <Curing method and cured product>

The epoxy resin composition according to the present invention can be cured by heating. Therefore, another aspect of the present invention is a cured product obtained by curing the aforementioned epoxy resin composition (cured product of the epoxy resin composition).

The epoxy resin composition according to the present invention is also characterized in low cure shrinkage property when cured to form a cured product. Specifically, cure shrinkage rate is preferably 5% or less. The cure shrinkage rate is a value obtained by the method described in Examples. When the epoxy resin composition according to the present invention is used in an application such as an adhesive, the aforementioned cure shrinkage rate is preferably 4.5% or less for the purpose of inhibiting distortion of the adherend. The lower limit of the cure shrinkage rate, on the other hand, is not particularly limited, but is substantially approximately 0%.

The method for producing a cured product is not particularly limited, and any known method can be employed. One example includes a method in which the epoxy resin composition according to the present invention is applied on an adherend, and then the applied epoxy resin composition is heated to cure it. In this case, the thickness of the coated film (the applied film) is not particularly limited and is appropriately adjusted within the range where the adherend can be adhered. Moreover, the conditions for heating temperature and heating time (curing time) are not limited as long as the conditions are such that the epoxy resin composition can be sufficiently cured, and as specific examples of the heating temperature, it is preferably 50°C to 200°C, more preferably 50°C or higher and lower than 200°C, still more preferably 60°C to 150°C, and particularly preferably 70°C to 100°C. Thus, the epoxy resin composition according to the present invention is also characterized in low curing temperature. In addition, the curing time is also not particularly limited, but for example, it is preferably 30 seconds to 5 hours and more preferably 1 minute to 3 hours. As more specific examples of the heating temperature and heating time (curing time), the curing time is preferably 1 minute to 3 hours and more preferably 2 minutes to 2 hours, when the heating temperature is 50·°C or higher and lower than 200°C.

### <Adherend>

The epoxy resin composition according to the present invention has excellent adhesiveness to different materials, thereby it is suitable for adhesion and/or sealing applications between materials with different coefficients of linear expansion, such as plastics and metals.

In the present description, "different materials" refer to two or more materials that have different materials from each other, specifically, materials that have different coefficients of linear expansion from each other. Namely, the epoxy resin composition according to the present invention is preferably used for adhesion and/or sealing between adherends with different coefficients of linear expansion.

A difference in coefficients of linear expansion of materials with different coefficients of linear expansion is not particularly limited, but for example, it is preferably 0.1 × 10⁻⁶/K to 300 × 10⁻⁶/K, more preferably 1 × 10⁻⁶/K to 200 × 10⁻⁶/K, and particularly preferably 5 × 10⁻⁶/K to 100 × 10⁻⁶/K.

Incidentally, in the present description, "difference in coefficients of linear expansion of materials with different coefficients of linear expansion" shall represent a value obtained by subtracting a coefficient of linear expansion of a material with a smaller coefficient of linear expansion from a coefficient of linear expansion of a material with a larger coefficient of linear expansion. A coefficient of linear expansion for metallic materials is obtained in accordance with JIS Z 2285: 2003, and that for plastics is obtained in accordance with JIS K 7197: 2012.

Specific examples of adhesion between different materials include, for example, metal-to-metal, metal-to-plastic, metal-to-rubber, plastic-to-rubber, plastic-to-plastic, and rubber-to-rubber. Among them, metal-to- metal, metal-to-plastic, and plastic-to-plastic are preferred, and metal-to-plastic is more preferred.

Metals that are adherends include, for example, iron, stainless steel, copper, nickel, zinc, aluminum, magnesium, gold, silver, titanium, and the like. Moreover, plastics that are adherends include, for example, fiber-reinforced plastic (FRP), glass fiber-reinforced plastic (GFRP), carbon fiber-reinforced plastic (CFRP), polyacrylic, polyester, polyamide, acrylamide, acrylonitrile-butadiene-styrene copolymer (ABS), 6-nylon, 6,6-nylon, polycarbonate, polyacetal, polyethylene terephthalate, polybutylene terephthalate (PBT), polyphenylene sulfide, polyphenylene ether, polyetheretherketone, polyethylene, polypropylene, and the like. Examples of rubber as the adherend include, for example, nitrile rubber, urethane rubber, silicone rubber, EPDM, and the like. More specific examples of adhesion and/or sealing between different materials include adhesion between at least two or more adherends selected from these materials.

Moreover, each of the materials (each adherend) listed above may be pre-surface treated or untreated.

### <Applications>

The epoxy resin composition according to the present invention can be used for various applications. Examples of applications include, in the automotive field, adhesion, sealing, casting, coating, and the like, of switch parts for automobile, headlamps, parts inside engine, electrical parts, drive engines, brake oil tanks, body panels such as front hoods, fenders, and doors, windows, and the like; in the electronic materials field, adhesion, encapsulation, casting, coating, and the like, of flat panel displays (liquid crystal displays, organic EL displays, light emitting diode display apparatus, field emission displays), videodiscs, CDs, DVDs, MDs, pickup lenses, hard disks, and the like; in the battery field, adhesion, sealing, coating, and the like, of lithium batteries, lithium-ion batteries, manganese batteries, alkaline batteries, fuel cells, silicon-based solar cells, dye-sensitized solar cells, organic solar cells, and the like; in the field of optical components, adhesion, encapsulation, coating, and the like, of optical fiber materials around optical switches and optical connectors, optical passive components, optical circuit components, and peripheries of optoelectronic integrated circuits; in the field of optical equipment, adhesion, encapsulation, coating, and the like, of camera modules, lens materials, viewfinder prisms, target prisms, viewfinder covers, light receiving sensor parts, photography lenses, projection lenses of projection TVs, and the like; and in the infrastructure field, adhesion of gas pipes, water pipes, and the like, lining materials, sealing, coating materials, and the like. Among them, the epoxy resin composition of the present invention has a low viscosity, thereby enabling coating with minute amounts and being suitable for use in micro components.

### EXAMPLES

The present invention will be described in more detail by way of Examples below, but the present invention is not limited to these Examples. Tests were carried out in an environment of 25°C and 55% RH unless otherwise specified.

### <Preparation of epoxy resin composition>

### [Examples 1 to 3, Comparative Example 1]

The following components were prepared to prepare a composition. It is noted that viscosities of the components listed below were measured using a cone-plate type viscometer at a shear rate of 10 s⁻¹ in an environment of 25°C and 55% RH. The softening point of each component was also determined in accordance with JIS K 7234:1986 (ball-and-ring method).
Component (A) : A bifunctional bisphenol A type and F type mixed epoxy resin in liquid form at 25°C (mixture of a bisphenol A type epoxy resin and a bisphenol F type epoxy resin), trade name EPICLON (registered trademark) EX A-835LV (manufactured by DIC Corporation), epoxy equivalent: 165 g/eq., viscosity (25°C): 2,000 mPa·s (2 Pa·s).
   Note, however, the above epoxy resin (mixture) contains a bifunctional bisphenol A type epoxy resin (epoxy equivalent: approximately 180 g/eq.) that is liquid at 25°C and a bifunctional bisphenol F type epoxy resin (epoxy equivalent: approximately 160 g/eq.) that is liquid at 25°C in a mass ratio of approximately 50:50.
Component (B):
   Component (B-1): A bifunctional bisphenol A type epoxy resin that is liquid at 25°C, trade name jER (registered trademark) 834 (manufactured by Mitsubishi Chemical Corporation), epoxy equivalent: 230 to 270 g/eq., softening point: 30°C.
   Component (B-2):
      (B-2-1) a bifunctional bisphenol A type epoxy resin that is solid at 25°C, trade name: jER (registered trademark) 1001 (manufactured by Mitsubishi Chemical Corporation), epoxy equivalent: 450 to 500 g/eq., softening point: 64°C.
      (B-2-2) a bifunctional biphenyl epoxy resin that is solid at 25°C, trade name jERYX (registered trademark) 4000 H (manufactured by Mitsubishi Chemical Corporation), epoxy equivalent: 187 to 197 g/eq., softening point: 105°C.
Component (C): Pentaerythritol tetrakis(3-mercaptobutyrate), trade name: Karenz MT (registered trademark) PE1 (manufactured by Showa Denko K.K.), SH equivalent: 136 g/mol, number of SH groups in one molecule: 4.
Component (D): A modified aliphatic polyamine adduct, trade name: Fujicure (registered trademark) FXR-1081, amine value: 115, softening point: 125°C, average particle diameter: 6.0 µm.
Component (E): p-Tert-butylphenyl glycidyl ether, trade name Adekaglycylol ED-509S, epoxy equivalent: 206 g/eq., viscosity (25°C): 20 mPa.s.
Component (F) : Spherical silica, trade name: SC2500 (manufactured by ADMATECHS CO., LTD.), average particle diameter: 0.5 µm.

The component (A) and the component (B) were weighed into a vessel with a stirrer, and further the component (C) was added, and the mixture was stirred with a mixer for 30 minutes. Next, the component (D), the component (E), and the component (F) were added and stirred for 10 minutes. The proportions (unit: parts by mass) of each component in the epoxy resin composition of each Example and Comparative Example are as shown in Table 1. Note that a blank column in Table 1 indicates that the corresponding component was not added. All of the tests (evaluations) shown below were carried out in an environment at 25°C.

### <Test (evaluation)>

### [Viscosity]

The viscosity of the obtained epoxy resin composition was measured using a cone-plate type viscometer at a shear rate of 10 s⁻¹ in an environment at 25°C and 55% RH. The acceptable criterion of the viscosity is a viscosity of 2,000 mPa·s or lower, but it is preferably 1,500 mPa·s or lower and more preferably 600 mPa·s or lower in consideration of workability.

### [Shear adhesion strength]

Each epoxy resin composition was applied on a test piece of SUS304 (25 × 100 × 1.0 mm, coefficient of linear expansion of 18 × 1.0⁻⁶/K), and then the test pieces of each of the following plastic materials were adhered thereon and fixed in place with a pinch. At this time, the adhesion area of the test piece of each plastic material was adjusted to 25 × 10 mm. The composition on the test piece was cured in a hot-air drying oven at 80°C for 60 minutes to obtain a cured product. After the cured product was returned to room temperature, the shear adhesion strength (unit: MPa) was measured at a tensile speed of 50 mm/min according to JIS K 6850: 1999 using a tensile testing machine.

### (Plastic material)

6-Nylon (25×100×1.5 mm), coefficient of linear expansion: 8x10⁻⁵/K.
6,6-Nylon (25×100×1.5 mm), coefficient of linear expansion: 10×10⁻⁵/K.
PBT (polybutylene terephthalate) (25×100×1.5 mm), coefficient of linear expansion: 2.5×10⁻⁵/K.
ABS (acrylonitrile-butadiene-styrene copolymer) (25×100×1.5 mm), coefficient of linear expansion: 8×10⁻⁵/K.
GFRP (glass fiber reinforced plastic) (25×100×1.5 mm), coefficient of linear expansion: 5.8×10⁻⁵/K.

### [Cure Shrinkage rate]

Into a transparent cylindrical plastic container was added dropwise each epoxy resin composition so that the composition reached 6 mm in depth, and the composition was cured at 80°C for 60 minutes to obtain a cured product. Then, the cure shrinkage rate was determined by the following method.

### (Calculation method of cure shrinkage rate)

The specific gravity of an uncured epoxy resin composition (S_{g1}) was measured by a specific gravity cup method. The masses of the aforementioned cured product in air (WA) and in water (distilled water) (WB) were also measured, and the specific gravity of the cured product (S_{g2}) was determined according to the formula S_{g2} = WA/ (WA-WB) . From the specific gravity of the uncured composition (S_{g1}) and the specific gravity of the cured product (S_{g2}) obtained above, the cure shrinkage rate(ΔV) calculated from the formula ΔV = {(S_{g2}-S_{g1})/S_{g2}} × 100 was adopted as the cure shrinkage rate.

(Acceptable criteria) Cure shrinkage rate: 5.0% or less.

**[Table 1]**

| | | | Example 1 | Example 2 | Example 3 | Comparative Example 1 |
|---|---|---|---|---|---|---|
| A | EPICLON EXA-835LV | | 100 | 100 | 100 | 144 |
| B-1 | jER 834 | | 44 | | | |
| B-2-1 | jER 1001 | | | 45 | | |
| B-2-2 | jER YX4000H | | | | 25 | |
| C | Karenz MT PE1 | | 208 | 227 | 174 | 194 |
| D | FXR-1081 | | 16 | 14 | 27 | 14 |
| E | ED-509S | | 103 | 127 | 99 | 43 |
| F | SC2500 | | 138 | 145 | 174 | 125 |
| Ratio of functional group equivalents | | (A+B)/C | 0.52 | 0.42 | 0.58 | 0.61 |
| Viscosity mPa·s | | | 600 | 1000 | 568 | 700 |
| Shear adhesion strength MPa | | 6-Nylon ISUS304 | 3.7 | 4.0 | 3.8 | 2.5 |
| | | 6,6-Nylon ISUS304 | 11.1 | 9.9 | 10 | 9.1 |
| | | PBT/SUS304 | 3.0 | 4.0 | 3.1 | 1.3 |
| | | ABS/SUS304 | 6.2 | 6.1 | 4.5 | 3 |
| | | FRP/SUS304 | 5.7 | 4.9 | 4.8 | 4.5 |
| Cure Shrinkage rate % | | | 4.2 | 4.0 | 4.2 | 3.9 |

| | | | | | | |
|---|---|---|---|---|---|---|
| * The ratio of functional group equivalents in the table is a value obtained based on the minimum value of functional group equivalents of each component. | | | | | | |

The epoxy resin compositions of Examples can be cured by heating at 80°C for 60 minutes, as shown in each of the aforementioned tests, and also exhibit favorable adhesive strength (high shear adhesion strength). Thus, it was confirmed that the epoxy resin compositions of Examples could be cured at lower than 100°C, which resulted in excellent low temperature curability.

As shown in Table 1, in the evaluation of the shear adhesion strength, the epoxy resin compositions of Examples 1 to 3 exhibited favorable shear adhesion strength in all combinations of the test pieces, compared to Comparative Example 1, which did not contain the component (B). The epoxy resin compositions of Examples 1 to 3 also resulted in smaller cure shrinkage rates. Furthermore, the epoxy resin compositions of Examples 1 to 3 had low viscosities, with the compositions of Examples 1 and 3 having particularly low viscosities.

From the above, it can be seen that the epoxy resin compositions of the present invention, can exhibit favorable adhesiveness to different materials by containing the component (A) to the component (E). In addition, it is found that the epoxy resin compositions according to the present invention have favorable low temperature curability, low viscosities, and excellent cure shrinkage property.

### Industrial applicability

The epoxy resin composition according to the present invention has excellent adhesiveness to different materials. Moreover, the epoxy resin composition according to the present invention is very useful as adhesives, coating agents, and potting agents used for various members because the epoxy composition according to the present invention has low temperature curability and a low viscosity for favorable workability, and further has low sure shrinkage property.

The present application is based on Japanese Patent Application No. 2020-161114, filed on September 25, 2020, the disclosure content of which is hereby incorporated as its entirety by reference.

## Claims

1. An epoxy resin composition comprising the following components (A) to (E):
(A) a compound with an epoxy equivalent of less than 210 g/eq. that is liquid at 25°C and has two or more epoxy groups in one molecule,
(B) (B-1) a compound with an epoxy equivalent of 210 g/eq. or more that is liquid at 25°C and has two or more epoxy groups in one molecule and/or (B-2) a compound that is solid at 25°C and has two or more epoxy groups in one molecule,
(C) a thiol curing agent,
(D) a latent curing agent,
(E) a reactive diluent.

2. The epoxy resin composition according to claim 1, wherein the component (A) is a bisphenol type epoxy resin.

3. The epoxy resin composition according to claim 1 or 2, wherein a content of the component (B) is 1 to 100 parts by mass relative to 100 parts by mass of the component (A).

4. The epoxy resin composition according to any one of claims 1 to 3, wherein the component (B) is a bisphenol type epoxy resin and/or a biphenyl type epoxy resin.

5. The epoxy resin composition according to any one of claims 1 to 4, wherein the component (C) is a compound having three or more SH groups.

6. The epoxy resin composition according to any of claims 1 to 5, wherein a content of the component (C) is 50 to 300 parts by mass relative to 100 parts by mass of the component (A).

7. The epoxy resin composition according to any one of claims 1 to 6, further comprising (F) an inorganic filler.

8. The epoxy resin composition according to any one of claims 1 to 7, which has cure shrinkage rate of 5% or less.

9. The epoxy resin composition according to any one of claims 1 to 8, for use in adhesion and/or sealing between adherends having different coefficients of linear expansion.

10. A cured product of the epoxy resin composition set forth in any one of claims 1 to 9.
